# EUROPÄISCHE PATENTANMELDUNG

(11) **EP 3 771 889 A1**
(43) Veröffentlichungstag der Anmeldung: **03.02.2021**
(21) Anmeldenummer: 19189377.5
(22) Anmeldetag: 31.07.2019
(51) Int. Cl.: G01D 3/10, H01H 19/56, H01H 15/18, G01D 3/024, G01D 5/165

(54) **MESSVORRICHTUNG**

(71) Anmelder: Siemens Aktiengesellschaft, 80333 München (DE)
(72) Erfinder: SAFRANEK, Petr, 54701 Nachod (CZ); STUDNICKA, Michal, 54101 Trutnov (CZ)
(74) Vertreter: Maier, Daniel Oliver

(57) **Zusammenfassung**

Messvorrichtung (1), umfassend eine Messschaltung (2) zur Erfassung eines Messsignals (3), eine analoge Auswahlvorrichtung (4) zur Wahl eines Messbereichs bei der Erfassung des Messsignals (3) und eine Messbereichsskala (10) zur Anzeige des durch die analoge Auswahlvorrichtung (4) gewählten Messbereichs,
wobei die Messbereichsskala (10) zumindest zwei Einstellbereichen (11-14) und zumindest einen Übergangsbereich (21-23) aufweist, wobei jeweils ein Einstellbereich alternierend mit jeweils einem Übergangsbereich längs einer Erstreckung der Messbereichsskala (10) angeordnet sind,
und die analoge Auswahlvorrichtung (4) so angeordnet ist, dass eine Auswahl eines Einstellbereichs (11-14) oder eines Übergangsbereichs (21-23) längs der Erstreckung der Messbereichsskala (10) erfolgt und die analoge Auswahlvorrichtung (4) dabei einen analogen Auswahlwert (5) festlegt,
und ferner eine elektronische Logik (6) und ein Signalisierungsmittel (7) vorgesehen sind, wobei die elektronische Logik (6) dazu eingerichtet ist, den analogen Auswahlwert (5) zu erfassen und zu prüfen, ob dieser einem Wert entspricht, welcher einem Übergangsbereich (21-23) zugeordnet ist, und falls zutreffend, ein Signal mittels dem Signalisierungsmittel (7) auszugeben.

## Beschreibung

Die Erfindung betrifft eine Messvorrichtung, umfassend eine Messschaltung zur Erfassung eines Messsignals, eine analoge Auswahlvorrichtung zur Wahl eines Messbereichs bei der Erfassung des Messsignals und eine Messbereichsskala zur Anzeige des durch die analoge Auswahlvorrichtung gewählten Messbereichs.

Messvorrichtungen im industriellen Umfeld sollen häufig besondere Anforderungen an den Einbau in Anlagen erfüllen, wie beispielsweise ein bevorzugter Formfaktor, eine spezielle Montageart oder eine besondere Bedienung eines Sensors.

Beispielsweise kann es vorsehen sein, dass eine Messvorrichtung in ein Gehäuse für eine Montage in einem Installationsschrank mittels einer Hut- oder Tragschienenbefestigung (wie nach DIN EN 60715:2001-0 oder TH 35 gemäß DIN EN 50022) integriert werden soll, wobei das Gehäuse möglichst schmal ausgeführt werden soll. Dies kann dazu führen, dass nur sehr wenig Platz für Bedien- oder Einstellelemente der Messvorrichtung auf der Vorderseite des Hutschienengehäuses zur Verfügung steht und die Bedien- oder Einstellelemente sehr klein ausgeführt werden müssen. Ferner kann es erwünscht sein, dass die Bedienung der Bedien- oder Einstellelemente mittels einem Schraubenzieher erfolgen soll, wie es bei der Elektroinstallation häufig vorgesehen ist. Ein solches Bedienelement, beispielsweise für eine Messbereichseinstellung, kann dabei zu einer falschen Konfiguration der Messvorrichtung oder zu einer Fehlinterpretation von Messwerten führen, was auf mechanische Toleranzen zwischen dem analogen Einstellelement und einer zugeordneten Messbereichsanzeige und/oder Skala zurückgeführt werden kann. Dadurch kann die Verlässlichkeit von Messwerten, die durch eine derartige Messvorrichtung erfasst werden, ungünstig beeinträchtigt werden.

Es ist die Aufgabe der Erfindung die Messvorrichtung eingangs genannter Art dahingehend zu verbessern, dass die Verlässlichkeit von Messwerten verbessert wird.

Die Aufgabe wird durch die Messvorrichtung eingangs genannter Art gelöst, indem die Messbereichsskala zumindest zwei Einstellbereiche und zumindest einen Übergangsbereich aufweist, wobei jeweils ein Einstellbereich von den zumindest zwei Einstellbereichen alternierend mit jeweils einem Übergangsbereich von dem zumindest einen Übergangsbereich längs einer Erstreckung der Messbereichsskala angeordnet sind,
und die analoge Auswahlvorrichtung so angeordnet ist, dass eine Auswahl eines Einstellbereichs oder eines Übergangsbereichs längs der Erstreckung der Messbereichsskala erfolgt und die analoge Auswahlvorrichtung dabei einen analogen Auswahlwert festlegt,
und ferner eine elektronische Logik und ein Signalisierungsmittel vorgesehen sind, wobei die elektronische Logik dazu eingerichtet ist, den analogen Auswahlwert zu erfassen und zu prüfen, ob dieser einem Wert entspricht, welcher einem Übergangsbereich zugeordnet ist, und falls zutreffend, ein Signal mittels dem Signalisierungsmittel auszugeben.

Dadurch wird erreicht, dass die Messvorrichtung bei Übergang zwischen zwei benachbarten Einstellbereichen ein Signal ausgibt, welches einem Benutzer angibt, dass ein Übergangsbereich gewählt ist, bei dem es auf der Skala nicht eindeutig erkennbar ist, welcher der beiden benachbarten Einstellbereich tatsächlich ausgewählt ist und sich die analoge Auswahlvorrichtung daher in einem Übergangsbereich der Skala befindet. Der analoge Auswahlwert ist dabei aber trotzdem immer eindeutig und von der Skala unabhängig. Dadurch wird sichergestellt, dass eine weitere Betätigung der analogen Auswahlvorrichtung durch den Benutzer benötigt wird, um eine korrekte Auswahl des gewünschten Einstellbereichs zu erhalten und dadurch die Verlässlichkeit von ermittelten Messwerten verbessert wird.

Es kann auch vorgesehen sein, dass die Messbereichsskala eine sichtbare erste Skala und eine logische, nicht sichtbare zweite Skala umfasst.

Die sichtbare Skala ist beispielsweise auf das Messgerät aufgedruckt, während die logische Skala durch die Logik konfiguriert beziehungsweise programmiert ist.

Die sichtbare Skala kann der logischen Skala entsprechen, oder auch von der logischen Skala abweichen.

Beispielsweise kann die sichtbare Skala auf explizit erkennbare Übergangsbereiche verzichten oder diese nur sehr schmal zeigen, obwohl die logische Skala andere beziehungsweise breitere Übergangsbereiche vorsieht. Die Abweichung zwischen der logischen Skala und sichtbaren Übergangsbereichen der aufgedruckten Skala kann sinnvoll sein, um die mechanischen Toleranzen der Skala und der analogen Auswahlvorrichtung entsprechend zu berücksichtigen.

Die Einstellbereiche der sichtbaren Skala und die Einstellbereiche der logischen Skala korrespondieren zueinander und überlappen sich dabei zumindest. Mit anderen Worten kann ein jeweiliger Einstellbereich der sichtbaren Skala größer sein als der korrespondierende Einstellbereich der logischen Skala, da ein Übergangsbereich der logischen Skala einen Teil des jeweiligen Einstellbereichs der sichtbaren Skala einnimmt.

Die Übergangsbereiche der logischen Skala können mit Einstellbereichen der sichtbaren Skala überlappen.

Der Übergangsbereich der logischen Skala kann durch die Logik konfiguriert beziehungsweise programmiert werden.

Durch das Signalisierungsmittel wird ein Verlassen eines gewählten Messbereichs und ein anschließendes Eintreten in einen benachbarten neuen Messbereich durch eine entsprechende Signalisierung sichergestellt. Mit anderen Worten wird durch eine Sequenz aus einem ersten Messbereich, einem angrenzenden Übergangsbereich und einen angrenzenden zweiten Messbereich sichergestellt und einem Bediener signalisiert, dass ein Messbereichswechsel erfolgt ist. Der Bediener muss sich folglich nicht nur auf die Ablesung der Position der analogen Auswahlvorrichtung gegenüber einer Skala verlassen, welche durch mechanische Toleranzen fehleranfällig ist, sondern erfährt eine zusätzliche, verlässliche Information zu einem durchgeführten Bereichswechsel. Das Signal kann beispielsweise optisch durch eine LED, akustisch durch einen Tongeber oder auch haptisch durch einen Vibrator erzeugt werden.

In einer Weiterbildung der Erfindung ist es vorgesehen, dass die Messvorrichtung ein Temperaturüberwachungsrelais ist.

Dadurch wird erreicht, dass mehrere Messbereiche von Temperatursensoren von der Messvorrichtung unter Verwendung von einer sehr kostengünstigen, kleinen und leicht bedienbaren analogen Auswahlvorrichtung ausgewählt werden können.

In einer Weiterbildung der Erfindung ist es vorgesehen, dass die Erstreckung der Messbereichsskala kreisförmig ist. Dabei entspricht die Erstreckung der Skala einem Winkelbereich.

Dadurch wird erreicht, dass eine sehr kostengünstige, kleine und leicht bedienbare, analoge Auswahlvorrichtung verwendet werden kann, die sich insbesondere für eine Bedienung mit einem Schraubenzieher eignet.

Bei einer kreisförmigen Skala ist es günstig, wenn es mindestens so viele Übergangsbereiche wie Einstellbereiche gibt.

In einer Weiterbildung der Erfindung ist es vorgesehen, dass die analoge Auswahlvorrichtung ein Potentiometer ist.

Dadurch wird erreicht, dass die analoge Auswahlvorrichtung sehr kostengünstig durch eine, im industriellen Umfeld bereits erprobte und bewährte Technologie realisiert werden kann, welche nicht nur eine Bereichsauswahl, sondern beispielsweise auch eine analoge Einstellung des Messbereichs oder der Messempfindlich erlaubt.

In einer Weiterbildung der Erfindung ist es vorgesehen, dass zumindest ein Übergangsbereich von dem zumindest einen Übergangsbereich eine Erstreckung längs der Erstreckung der Messbereichsskala aufweist, welche höchstens halb so groß ist, wie die Erstreckung eines Einstellbereichs von den zumindest zwei Einstellbereichen längs der Erstreckung der Messbereichsskala.

Dadurch wird erreicht, dass ein Übergangsbereich auf der Skala derart günstige Abmessungen in Bezug auf einen Einstellbereich aufweist, und für die Messvorrichtung beziehungsweise deren Gehäuse insgesamt eine geringe Baugröße, das heißt ein geringer Formfaktor erreicht wird.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockschaltbild mit einem Ausführungsbeispiel der Erfindung,
- Fig. 2: ein Beispiel für eine Skala zur Messbereichsauswahl und einer entsprechenden analogen Auswahlvorrichtung.

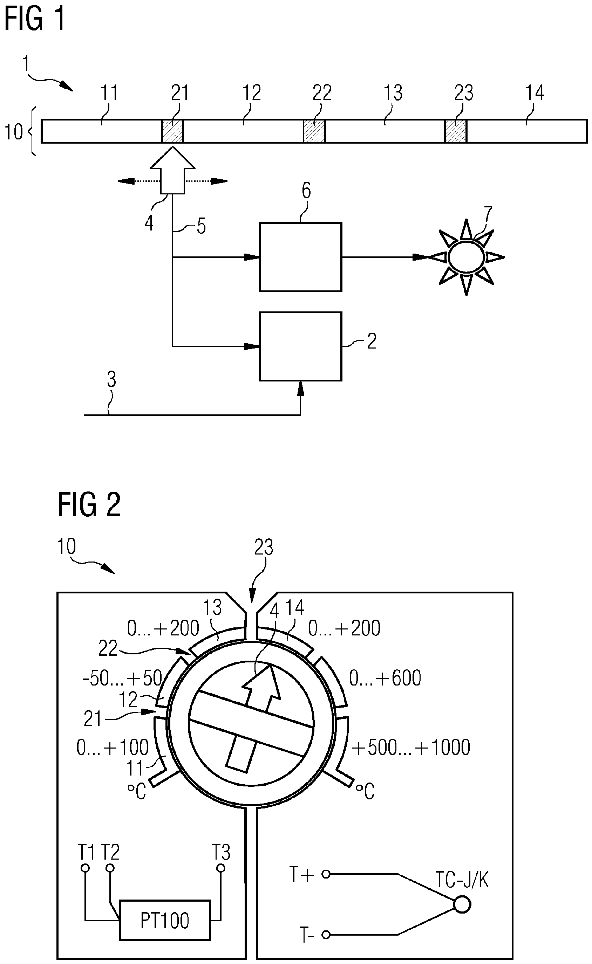

**Fig. 1** zeigt schematisch ein Blockschaltbild für ein Ausführungsbeispiel einer erfindungsgemäßen Messvorrichtung 1, welche in diesem Beispiel ein Temperaturüberwachungsrelais ist.

Die Messvorrichtung weist eine Messschaltung 2 zur Erfassung eines Messsignals 3, eine analoge Auswahlvorrichtung 4 zur Wahl eines Messbereichs bei der Erfassung des Messsignals 3 und eine Messbereichsskala 10 zur Anzeige des durch die analoge Auswahlvorrichtung 4 gewählten Messbereichs auf.

Die Messbereichsskala 10 weist vier Einstellbereiche 11-14 und drei Übergangsbereiche 21-23 auf.

Jeweils ein Einstellbereich von den vier Einstellbereichen 11-14 ist alternierend mit jeweils einem Übergangsbereich von den drei Übergangsbereichen 21-23 längs einer Erstreckung der Messbereichsskala 10 angeordnet.

Mit anderen Worten sind jeweils Einstellbereiche und Übergangsbereiche benachbart aneinandergrenzend längs der Erstreckung der kreisförmigen Messbereichsskala 10 angeordnet.

Die analoge Auswahlvorrichtung 4 ist dabei so angeordnet, dass eine Auswahl eines Einstellbereichs 11-14 oder eines Übergangsbereichs 21-23 längs der Erstreckung der Messbereichsskala 10 erfolgt und die analoge Auswahlvorrichtung 4 dabei einen analogen Auswahlwert 5 festlegt.

Die analoge Auswahlvorrichtung 4 ist in diesem Beispiel ein Dreh-Potentiometer mit einem regelbaren ohmschen Widerstand. Es sind auch andere analoge Auswahlvorrichtungen, wie Schiebe-Potentiometer oder regelbare Kapazitäten möglich.

Ferner sind eine elektronische Logik 6 und ein Signalisierungsmittel 7 vorgesehen.

Die elektronische Logik 6 ist dazu eingerichtet, den analogen Auswahlwert 5 zu erfassen und zu prüfen, ob dieser einem Wert entspricht, welcher einem Übergangsbereich 21-23 zugeordnet ist. Die Logik kann diskret aufgebaut sein oder auch durch eine programmierte Ausführungseinheit in einem Mikrocontroller. Es kann eine analog-zu-digital-Konversion für den analogen Auswahlwert 5 vorgesehen sein.

Falls der Auswahlwert 5 einem Übergangsbereich 21-23 zugeordnet ist, wird beispielsweise ein optisches Signal mittels dem Signalisierungsmittel 7 in Form einer LED ausgegeben.

Die LED kann zusätzlich auch für andere Anzeigezwecke verwendet werden. Eine Unterscheidung der aktuellen Anzeige von der vorher ausgeführten Signalisierung kann beispielsweise über eine andere Darstellungsfarbe oder eine Blinkfrequenz der LED erfolgen.

**Fig. 2** zeigt ein Beispiel für eine Skala 10 für die Messvorrichtung 1, wobei die analoge Auswahlvorrichtung 4 mittels eines Schraubenziehers bedienbar ist. An der analoge Auswahlvorrichtung 4 ist ein Pfeil als Markierung angebracht, um die Position gegenüber der Skala 10 eindeutig und sichtbar zu machen.

Die Skala 10 ist so ausgeführt, dass zumindest ein Übergangsbereich von den drei Übergangsbereichen 21-23 eine Erstreckung längs der Erstreckung der Messbereichsskala 10 aufweist, hier eine Winkelbereich der kreisförmigen Skala, welche höchstens halb so groß ist, wie die Erstreckung eines Einstellbereichs von den vier Einstellbereichen 11-14 längs der Erstreckung der Messbereichsskala 10.

### Bezugszeichenliste:

- 1: Einstellvorrichtung
- 2: Messschaltung
- 3: Messsignal
- 4: analoge Auswahlvorrichtung
- 5: Auswahlwert
- 6: elektronische Schaltung
- 7: Signalisierungsmittel
- 10: Skala
- 11-14: Einstellbereich
- 21-23: Übergangsbereich

## Patentansprüche

1. Messvorrichtung (1), umfassend eine Messschaltung (2) zur Erfassung eines Messsignals (3), eine analoge Auswahlvorrichtung (4) zur Wahl eines Messbereichs bei der Erfassung des Messsignals (3) und eine Messbereichsskala (10) zur Anzeige des durch die analoge Auswahlvorrichtung (4) gewählten Messbereichs,
**dadurch gekennzeichnet, dass** die Messbereichsskala (10) zumindest zwei Einstellbereichen (11-14) und zumindest einen Übergangsbereich (21-23) aufweist, wobei jeweils ein Einstellbereich von den zumindest zwei Einstellbereichen (11-14) alternierend mit jeweils einem Übergangsbereich von dem zumindest einen Übergangsbereich (21-23) längs einer Erstreckung der Messbereichsskala (10) angeordnet sind,
und die analoge Auswahlvorrichtung (4) so angeordnet ist, dass eine Auswahl eines Einstellbereichs (11-14) oder eines Übergangsbereichs (21-23) längs der Erstreckung der Messbereichsskala (10) erfolgt und die analoge Auswahlvorrichtung (4) dabei einen analogen Auswahlwert (5) festlegt,
und ferner eine elektronische Logik (6) und ein Signalisierungsmittel (7) vorgesehen sind, wobei die elektronische Logik (6) dazu eingerichtet ist, den analogen Auswahlwert (5) zu erfassen und zu prüfen, ob dieser einem Wert entspricht, welcher einem Übergangsbereich (21-23) zugeordnet ist, und falls zutreffend, ein Signal mittels dem Signalisierungsmittel (7) auszugeben.

2. Vorrichtung nach dem vorhergehenden Anspruch, wobei die Messvorrichtung (1) ein Temperaturüberwachungsrelais ist.

3. Vorrichtung nach einem der vorhergehenden Ansprüche, wobei die Erstreckung der Messbereichsskala (10) kreisförmig ist.

4. Vorrichtung nach einem der vorhergehenden Ansprüche, wobei die analoge Auswahlvorrichtung (4) ein Potentiometer ist.

5. Vorrichtung nach einem der vorhergehenden Ansprüche, wobei zumindest ein Übergangsbereich von dem zumindest einen Übergangsbereich (21-23) eine Erstreckung längs der Erstreckung der Messbereichsskala (10) aufweist, welche höchstens halb so groß ist, wie die Erstreckung eines Einstellbereichs von den zumindest zwei Einstellbereichen (11-14) längs der Erstreckung der Messbereichsskala (10).
